# EUROPEAN PATENT SPECIFICATION

(11) **EP 3 846 404 B1**
(45) Date of publication and mention of the grant of the patent: **01.03.2023**
(21) Application number: 19862215.1
(22) Date of filing: 22.08.2019
(51) Int. Cl.: H04L 9/40, H04W 12/10, H04W 12/121

(54) **DATA VERIFICATION METHOD, DEVICE AND STORAGE MEDIUM**
DATENVERIFIZIERUNGSVERFAHREN, VORRICHTUNG UND SPEICHERMEDIUM
PROCÉDÉ DE VÉRIFICATION DE DONNÉES, DISPOSITIF ET SUPPORT D'INFORMATIONS

(30) Priority: 21.09.2018 CN 201811109958
(43) Date of publication of application: 07.07.2021
(73) Proprietor: HUAWEI TECHNOLOGIES CO., LTD., Shenzhen, Guangdong 518129 (CN)
(72) Inventor: ZHAO, Xuwen, Shenzhen, Guangdong 518129 (CN); ZHANG, Bo, Shenzhen, Guangdong 518129 (CN)
(74) Representative: Maiwald GmbH
(86) International application number: PCT/CN2019/101965
(87) International publication number: WO 2020/057316

(56) References cited:
- CN-A- 101 409 897
- CN-A- 107 566 115
- CN-A- 108 347 416
- US-A1- 2018 198 867

## Description

### TECHNICAL FIELD

Embodiments of this application relate to the field of communications technologies, and in particular, to a data check method, a data check apparatus, and a storage medium.

### BACKGROUND

Currently, in the 5^{th} generation mobile communications technology (The 5th Generation mobile communication technology, 5G), user plane security termination point is on a base station, and a packet data convergence protocol (Packet Data Convergence Protocol, PDCP) layer transmits data over a radio air interface between user equipment (User Equipment, UE) and the base station. When user plane integrity protection is not enabled on the radio air interface, user plane data may be injected or deleted. To prevent such attacks on the user plane data, a PDCP layer counter check procedure is introduced, to be specific, a quantity of PDCP data packets sent or received by the UE and the base station is periodically checked.

With development of communications technologies, the user plane security termination point may be on another device in the future, for example, a user plane function (User Plane Function, UPF). Alternatively, user plane security protection is performed based on another data granularity, for example, a quality of service flow (QoS flow) granularity. If the user plane security termination point is on the UPF, when the user plane integrity protection is not enabled on the radio air interface, there is no check mechanism for data transmitted between the UE and the UPF entity in the prior art. CN 108347416 A discloses a method for negotiating security protection for session management network element, involves activating security protection for user plane by user plane gateway according to security protection algorithm and context for security protection.

### SUMMARY

Embodiments of this application provide a data check method, a data check apparatus, and a storage medium, to protect data transmitted between UE and a UPF when user plane integrity protection is not enabled on a radio air interface. Whether there is a data plane attack is determined by determining whether quantities of uplink and downlink data packets sent or received by the UE and the UPF are the same.

According to a first aspect, embodiments of this application provide a data check method, including: obtaining a first counter value and a second counter value, where the first counter value is a value obtained by performing counting by UE during data transmission between the UE and a UPF entity, and the second counter value is a value obtained by performing counting by the UPF entity during the data transmission between the UE and the UPF entity; determining whether the first counter value matches the second counter value; and if the first counter value does not match the second counter value, sending a response message to a session management network element.

Whether data transmitted between the UE and the UPF entity is abnormal is determined by determining whether the first counter value matches the second counter value, and the response message is sent to the session management network element when the first counter value does not match the second counter value, so that the session management network element performs subsequent processing based on the response message, for example, releasing a data connection or reporting a data abnormality. It may be understood that whether there is a user plane attack is determined by determining whether quantities of uplink and downlink data packets sent or received by the UE and the UPF are the same.

If the first counter value does not match the second counter value, the response message sent to the session management network element is used to indicate that the first counter value does not match the second counter value.

If the first counter value matches the second counter value, the UE may end a current data check procedure. Further, if the first counter value matches the second counter value, the UE may send a response message with empty content. In this case, if the first counter value does not match the second counter value, the UE may send a response message whose content is not empty.

In a possible implementation, if the first counter value does not match the second counter value, the response message includes at least one of data granularity information, the first counter value, and the second counter value.

In a possible implementation, the determining whether the first counter value matches the second counter value may include: when a difference between the first counter value and the second counter value is greater than a preset value, determining that the first counter value does not match the second counter value.

Alternatively, the determining whether the first counter value matches the second counter value may include: when a high-order part of the first counter value is different from a high-order part of the second counter value, determining that the first counter value does not match the second counter value.

According to a second aspect, embodiments of this application provide a data check apparatus, including a processing module and a transceiver module.

The processing module is configured to obtain a first counter value and a second counter value, and determine whether the first counter value matches the second counter value. The first counter value is a value obtained by performing counting by UE during data transmission between the UE and a UPF entity, and the second counter value is a value obtained by performing counting by the UPF entity during the data transmission between the UE and the UPF entity.

The transceiver module is configured to: if the first counter value does not match the second counter value, send a response message to a session management network element.

Based on a same inventive concept, a problem-resolving principle of the apparatus corresponds to the solution of the method design of the first aspect. Therefore, for implementation of the apparatus, refer to implementation of the method, and repeated parts are not described again.

According to a third aspect, embodiments of this application provide a data check apparatus, including a transceiver and a processor. The transceiver is configured to support communication between the data check apparatus and a session management network element, and receive and send information or an instruction in any implementation of the first aspect. The processor is configured to support the data check apparatus in performing any method in the first aspect.

According to a fourth aspect, embodiments of this application provide a computer-readable storage medium. The computer-readable storage medium stores a computer program, the computer program includes at least one piece of code, and the at least one piece of code may be executed by a computer, to control the computer to perform the method according to any implementation of the first aspect.

According to a fifth aspect, embodiments of this application provide a program. When the program is executed by a computer, the program is used to perform any one of the foregoing methods.

All or some of the foregoing programs may be stored in a storage medium that is encapsulated with a processor, or all or some of the foregoing programs may be stored in a memory that is not encapsulated with a processor.

Optionally, the processor may be a chip.

According to a sixth aspect, embodiments of this application provide a computer program product, including a program instruction. The program instruction is used to perform any one of the foregoing methods.

According to a seventh aspect, embodiments of this application provide a chip, including a processing module and a communications interface. The processing module can perform any one of the foregoing methods.

Further, the chip may further include a storage module (for example, a memory). The storage module is configured to store an instruction, the processing module is configured to execute the instruction stored in the storage module, and execution of the instruction stored in the storage module enables the processing module to perform any one of the foregoing methods.

The foregoing and other aspects of this application are clearer and easier to understand in descriptions of the following (a plurality of) embodiments.

### BRIEF DESCRIPTION OF DRAWINGS

FIG. 1 is a schematic diagram of a communications system according to an embodiment of this application;
FIG. 2 is a schematic diagram of a communications system according to another embodiment of this application;
FIG. 3 is a flowchart of a data check method according to an embodiment of this application;
FIG. 4 is a schematic diagram of a protocol stack of a user plane;
FIG. 5 is a flowchart of a data check method according to another embodiment of this application;
FIG. 6 is a signaling interaction diagram of a data check method according to still another embodiment of this application;
FIG. 7 is a signaling interaction diagram of a data check method according to still another embodiment of this application;
FIG. 8 is a signaling interaction diagram of a data check method according to still another embodiment of this application;
FIG. 9 is a signaling interaction diagram of a data check method according to still another embodiment of this application;
FIG. 10 is a signaling interaction diagram of a data check method according to still another embodiment of this application;
FIG. 11 is a signaling interaction diagram of a data check method according to still another embodiment of this application;
FIG. 12 is a signaling interaction diagram of a data check method according to still another embodiment of this application;
FIG. 13 is a signaling interaction diagram of a data check method according to still another embodiment of this application;
FIG. 14 is a schematic block diagram of a data check apparatus according to an embodiment of this application; and
FIG. 15 is a schematic block diagram of a data check apparatus according to another embodiment of this application.

### DESCRIPTION OF EMBODIMENTS

It should be understood that the term "and/or" in this specification describes only an association relationship for describing associated objects and represents that three relationships may exist. For example, A and/or B may represent the following three cases: Only A exists, both A and B exist, and only B exists.

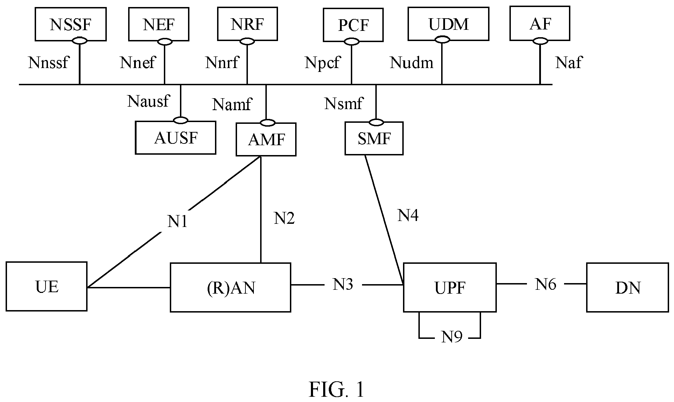

FIG. 1 is a schematic diagram of a communications system according to an embodiment of this application. The communications system is an architecture of a 5G system in a non-roaming scenario. As shown in FIG. 1, the communications system includes the following network functions and entities:
a network slice selection function (Network Slice Selection Function, NSSF), a network exposure function (Network Exposure Function, NEF), a network function repository function (NF Repository Function, NRF), a policy control function (Policy Control Function, PCF), unified data management (Unified Data Management, UDM), an application function (Application Function, AF), an authentication server function (Authentication Server Function, AUSF), a core access and mobility management function (Core Access and Mobility Management Function, AMF), a session management function (Session Management Function, SMF), UE, a (radio) access network ((Radio) Access Network, (R)AN), a UPF, and a data network (Data Network, DN).

An Nnssf is a service-based interface presented by the NSSF. An Nnef is a service-based interface presented by the NEF. An Nnrf is a service-based interface presented by the NRF. An Npcf is a service-based interface presented by the PCF. An Nudm is a service-based interface presented by the UDM. ANaf is a service-based interface presented by the AF. An Nausf is a service-based interface presented by the AUSF. An Namf is a service-based interface presented by the AMF. An Nsmf is a service-based interface presented by the SMF. An N1 is a reference point between the UE and the AMF. An N2 is a reference point between the (R)AN and the AMF. An N3 is a reference point between the (R)AN and the UPF. An N4 is a reference point between the SMF and the UPF. An N6 is a reference point between the UPF and the DN. An N9 is a reference point between two UPFs.

In the communications system shown in FIG. 1, a user plane and a control plane are separated, and a lower part in the figure is the user plane.

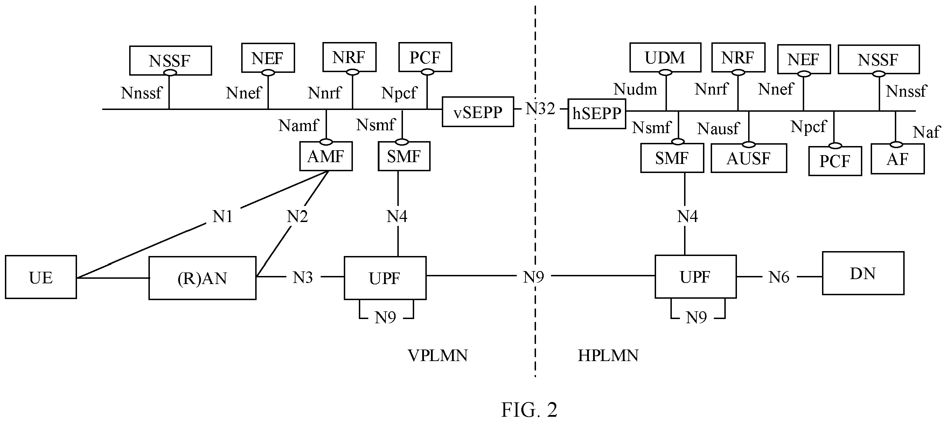

FIG. 2 is a schematic diagram of a communications system according to another embodiment of this application. The communications system is an architecture of a 5G system in a home routed (home routed) roaming scenario. As shown in FIG. 2, the communications system includes two public land mobile networks (Public Land Mobile Network, PLMN): a visited network (VPLMN) and a home network (HPLMN). Each PLMN includes a secure edge protection proxy (Security Edge Protection Proxy, SEPP). The secure edge protection proxy of the visited network and the secure edge protection proxy of the home network are represented as a vSEPP and an hSEPP respectively.

The VPLMN includes an NSSF, an NEF, an NRF, a PCF, the vSEPP, an AMF, an SMF, UE, an (R)AN and a UPF.

The HPLMN includes the NSSF, the NEF, the NRF, UDM, the hSEPP, an AF, the PCF, an AUSF, the SMF, the UPF, and a DN.

An Nnssf is a service-based interface presented by the NSSF. An Nnef is a service-based interface presented by the NEF. An Nnrf is a service-based interface presented by the NRF. An Npcf is a service-based interface presented by the PCF. An Nudm is a service-based interface presented by the UDM. ANaf is a service-based interface presented by the AF. An Nausf is a service-based interface presented by the AUSF. An Namf is a service-based interface presented by the AMF. An Nsmf is a service-based interface presented by the SMF. An N1 is a reference point between the UE and the AMF. An N2 is a reference point between the (R)AN and the AMF. An N3 is a reference point between the (R)AN and the UPF. An N4 is a reference point between the SMF and the UPF. An N6 is a reference point between the UPF and the DN. An N9 is a reference point between two UPFs. An N32 is a reference point between the vSEPP and the hSEPP.

It should be noted that, in the communications system shown in FIG. 2, both the SMF in the VPLMN and the SMF in the HPLMN can perform an end-to-end data counter check, but only the UPF in the HPLMN can perform the end-to-end data counter check.

This embodiment of this application describes each embodiment with reference to the communications system shown in FIG. 1 or FIG. 2. For descriptions of related network elements and functions, refer to Table 1.

**Table 1**

| Names of the network elements | Function Description |
|---|---|
| UE | The UE includes a universal subscriber identity module (Universal Subscriber Identity Module, USIM) card, and mobile equipment (Mobile Equipment, ME). The UE triggers a counter check (Counter Check) procedure, sends or receives a counter check message, reports a counter value of user plane data, or compares and checks counter values reported by the UE and the UPF, and returns a response message. |
| gNB | The gNB is a radio base station in a 5G network. The gNB triggers the |
| | counter check procedure, sends or receives the counter check message, compares and checks the counter values reported by the UE and the UPF, and ends a procedure, releases a data connection, or reports a data abnormality based on a check result. |
| AMF entity | The AMF entity is an access and mobility management function entity. The AMF entity triggers the counter check procedure, sends or receives the counter check message, compares and checks the counter values reported by the UE and the UPF, and ends the procedure, releases the data connection, or reports the data abnormality based on the check result. |
| SMF entity | The SMF entity is a session management function entity. The SMF entity triggers the counter check procedure, sends or receives the counter check message, compares and checks the counter values reported by the UE and the UPF, and ends the procedure, releases the data connection, or reports the data abnormality based on the check result. |
| UPF entity | The UPF entity is a user plane function entity. The UPF entity triggers the counter check procedure, sends or receives the counter check message, reports the counter value of the user plane data, or compares and checks the counter values of the UE and the UPF. |

It may be understood that in the embodiment of this application, the UE may also be referred to as a terminal device. The terminal device may be a wireless terminal device or a wired terminal device. The wireless terminal device may be a device with a wireless transceiver function. The wireless terminal device may be deployed on a land, and includes an indoor device or an outdoor device, a hand-held device, or a vehicle-mounted device. The wireless terminal device may also be deployed on a water surface (for example, a steamship). The wireless terminal device may also be deployed in air (for example, an airplane, a balloon, or a satellite). The terminal device may be a mobile phone (mobile phone), a tablet (Pad), a computer with the wireless transceiver function, a virtual reality (Virtual Reality, VR) terminal device, an augmented reality (Augmented Reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

It should be noted that the "entity" in the embodiment of this application may be understood as a device with a function. For example, the UPF entity is a device with a user plane function, and may be simply represented as the UPF. Other entities are similar, and details are not described herein again.

In the embodiment of this application, user plane security termination point is on the UPF. In this case, when user plane integrity protection is not enabled on a radio air interface, the UE and the UPF entity need to periodically check a data volume of user plane data of a specific granularity. If a check result is inconsistent, the UE and the UPF entity determine that the user plane data may be maliciously injected or deleted by an attacker, and take measures such as releasing the data connection or reporting the data abnormality.

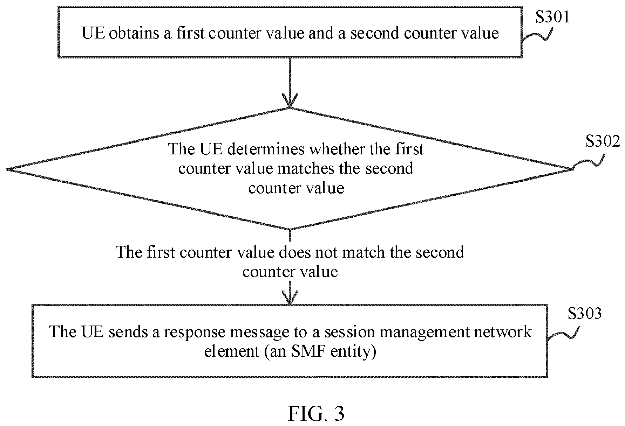

FIG. 3 is a flowchart of a data check method according to an embodiment of this application. This embodiment of this application provides a data check method. The data check method may be performed by a data check apparatus, and the data check apparatus may be implemented by using software and/or hardware. In addition, the data check apparatus may be any network element in the foregoing Table 1. UE is used as an example herein for description.

As shown in FIG. 3, the data check method includes the following steps.

S301: The UE obtains a first counter value and a second counter value.

The first counter value is a value obtained by performing counting by the UE during data transmission between the UE and a UPF entity, and the second counter value is a value obtained by performing counting by the UPF entity during the data transmission between the UE and the UPF entity.

It may be understood that, the data transmission between the UE and the UPF entity includes: The UE sends data to the UPF, and the UE receives the data sent by the UPF. If the UE sends the data to the UPF, in a normal case, a data volume sent by the UE is the same as a data volume received by the UPF. Similarly, if the UE receives the data sent by the UPF, in the normal case, a data volume received by the UE is the same as a data volume sent by the UPF. Therefore, when user plane integrity protection is not enabled on a radio air interface, the UE and the UPF may determine, by using counter values of the data transmitted between the UE and the UPF, whether the data transmission is abnormal. Therefore, the first counter value and the second counter value are first obtained.

Specifically, the UE obtains the first counter value, to be specific, the UE reads the value obtained by performing counting by the UE during the data transmission between the UE and the UPF entity. The UE may obtain the second counter value in a plurality of manners. For example, the UE receives a counter check message sent by a gNB, and the counter check message carries the second counter value. Further, the UE parses the counter check message to obtain the second counter value.

S302: The UE determines whether the first counter value matches the second counter value.

"Matching" in this step includes but is not limited to "equal" and "approximation".

In an implementation, this step may be specifically: when the first counter value is not equal to the second counter value, determine that the first counter value does not match the second counter value. Optionally, this step may further include: when the first counter value is equal to the second counter value, determine that the first counter value matches the second counter value.

In another implementation, this step may be specifically: when a difference between the first counter value and the second counter value is greater than a preset value, determine that the first counter value does not match the second counter value. Optionally, this step may further include: when the difference between the first counter value and the second counter value is less than the preset value, determine that the first counter value matches the second counter value. Further, when the difference between the first counter value and the second counter value is equal to the preset value, it may be determined that the first counter value matches the second counter value, or it may be determined that the first counter value does not match the second counter value. This may be specifically set based on an actual requirement. The preset value may be set based on an empirical value or the actual requirement. This is not limited in this application.

In still another implementation, considering that there is a packet loss to some extent on a user plane in the normal case, a difference of data in low-order parts of the counter values is acceptable within an error range. Therefore, this step may be specifically as follows: When a high-order part (the most significant parts of the COUNT values) of the first counter value is different from a high-order part of the second counter value, determine that the first counter value does not match the second counter value. Optionally, this step may further include: when the high-order part of the first counter value is equal to the high-order part of the second counter value, determine that the first counter value matches the second counter value.

For example, 8 bits (bit) may be used to represent the counter values (including the first counter value and the second counter value). The first 4 bits are considered as a high-order part of the counter value, and the last 4 bits are considered as a low-order part of the counter value. When determining whether the first counter value matches the second counter value, the UE only needs to determine whether the first 4 bits of the first counter value are the same as the first 4 bits of the second counter value. For example, the first counter value is represented as X₁X₂X₃X₄X₅X₆X₇X₈, and the second counter value is represented as Y₁Y₂Y₃Y₄Y₅Y₆Y₇Y₈. When X₁X₂X₃X₄ is the same as Y₁Y₂Y₃Y₄, it is determined that the first counter value matches the second counter value. When the X₁X₂X₃X₄ is different from the Y₁Y₂Y₃Y₄, it is determined that the first counter value does not match the second counter value. In addition, it should be further pointed out that a length of the high-order part may be a default value or may be a set value. For example, in a scenario in which a length of the counter value is 8 bits, for example, the first 3 bits are high-order bits, or the first 5 bits are high-order bits. This is not limited herein.

S303: If the first counter value does not match the second counter value, the UE sends a response message to a session management network element (an SMF entity).

Correspondingly, the SMF receives the response message, and releases a data connection between the UE and the UPF entity or reports a data abnormality based on the response message.

In this embodiment of this application, the UE determines, by determining whether the first counter value matches the second counter value, whether the data transmitted between the UE and the UPF entity is abnormal, and sends the response message to the session management network element when the first counter value does not match the second counter value, so that the session management network element performs subsequent processing based on the response message, for example, releasing the data connection or reporting the data abnormality, to protect the data transmitted between the UE and the UPF when the user plane integrity protection is not enabled on the radio air interface. Whether there is a data plane attack is determined by determining whether quantities of uplink and downlink data packets sent or received by the UE and the UPF are the same.

In some embodiments, if the first counter value matches the second counter value, the UE may end a current data check procedure.

For example, if the first counter value matches the second counter value, the UE may not send any response message.

For example, if the first counter value matches the second counter value, the UE may send the response message, but the response message is empty, which may be understood as that no substantial content is included. The response message with empty content may be understood as that the response message does not include any one of the first counter value and the second counter value, but it is not excluded that the response message includes other content. In other words, provided that the response message includes any one of the first counter value and the second counter value, it is considered that the response message is not empty.

For example, if the first counter value matches the second counter value, the UE may send the response message, and the response message is used to indicate that two counter values are consistent or matched. In some embodiments, if the first counter value does not match the second counter value, the UE may send a response message whose content is not empty. Optionally, if the first counter value does not match the second counter value, the response message may include at least one of data granularity information, the first counter value, and the second counter value. The data granularity information is related information of a granularity of the data transmitted between the UE and the UPF, for example, identification information of the granularity, and a size of the granularity.

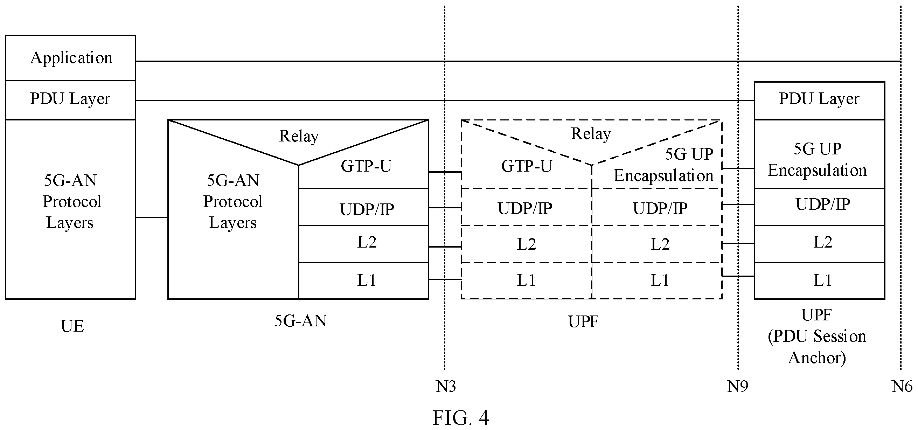

Optionally, the granularity may be specifically any one of a quality of service flow (QoS flow) granularity, a protocol data unit session (Protocol Data Unit Session, PDU Session) granularity, a radio bearer (Radio Bearer, RB) granularity, and the like. A size of a granularity of user plane data is as follows: A QoS flow granularity is less than an RB granularity, and the RB granularity is less than a PDU session granularity. The UE and the UPF can identify data of a minimum QoS flow granularity, the RB granularity, and the PDU session granularity. In the prior art, referring to a protocol stack of a user plane shown in FIG. 4, because there is a PDCP layer between UE and a gNB, there is a general packet radio service tunneling protocol for the user plane (General Packet Radio Service Tunnelling Protocol for the User plane, GTP-U) layer between the gNB and a UPF entity, and there is a protocol data unit (Protocol Data Unit, PDU) session layer between upper layers of the UE and the UPF entity, the UPF entity can implement data statistics on a PDU session granularity, but cannot implement data statistics on a data radio bearer (Data Radio Bearer, DRB) DRB granularity.

For example, if the data granularity information is an identifier of the QoS flow granularity mentioned earlier, the first counter value mentioned earlier may be a counter value corresponding to an identifier of a QoS flow granularity counted by the UE, for example, the first counter value may be represented as a QFI 1, a count value 1. The QFI 1 indicates the identifier of the QoS flow granularity, and the count value 1 indicates the counter value corresponding to the identifier of the QoS flow granularity. After determining that the first counter value does not match the second counter value, the UE sends the response message to the SMF. The response message carries the QFI 1. Alternatively, the response message carries the QFI 1 and the count value 1. Alternatively, the response message carries the count value 1. Similarly, a related description of the second counter value is similar to a description of the first counter value, and details are not described herein again.

Correspondingly, the SMF entity receives the response message, and further obtains the QFI 1 and/or the count value 1 carried in the response message. When the response message carries the count value 1, the SMF entity may determine, based on the count value 1, which QoS flow is abnormal, to be specific, the QFI 1 is abnormal herein. The SMF entity releases the data connection between the UE and the UPF entity based on the response message. The data connection is a QoS flow data connection corresponding to the QFI 1. Alternatively, when the response message carries the QFI 1, the SMF entity reports the data abnormality based on the response message, and abnormal data is QoS flow data corresponding to the QFI 1. For example, the SMF entity reports, based on the response message, the data abnormality to a core network element (for example, an AMF entity) and an external device (for example, an O&M server or a network data analytics function (Network Data Analytics Function, NWDAF) entity) that manages a data volume, and notifies the core network element and the external device of a counter value difference for further analysis. When the data connection is released, the UE and the UPF entity need to be notified.

In some embodiments, the RB granularity may include the data radio bearer (Data Radio Bearer, DRB) granularity and an evolved radio access bearer (E-UTRAN Radio Access Bearer, E-RAB) granularity. The E-RAB is similar to a DRB in a 4G system.

The following describes the foregoing data check method with reference to a specific example.

### Embodiment 1

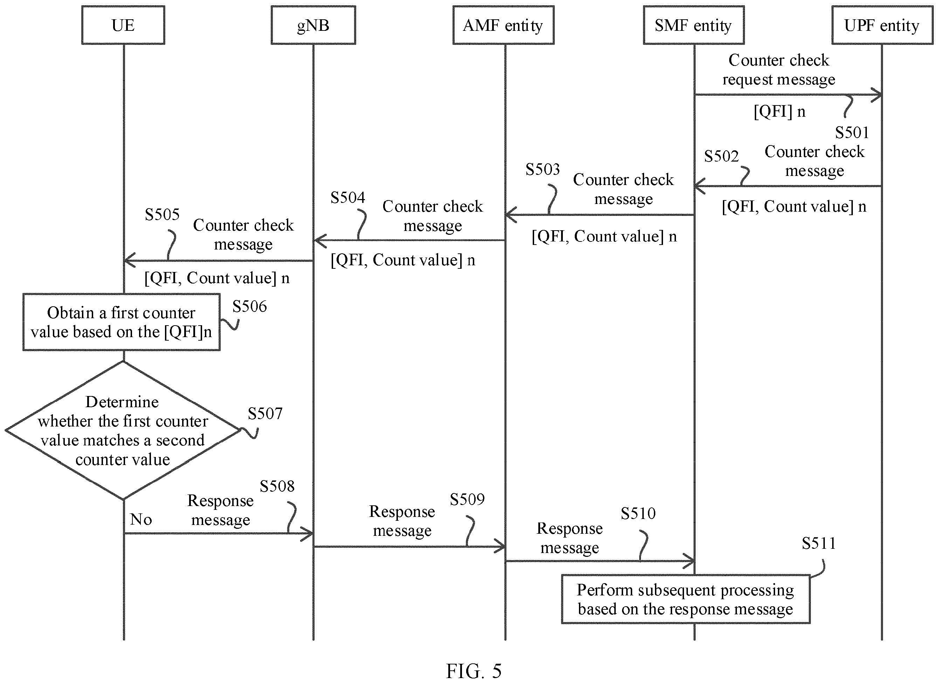

FIG. 5 is a signaling interaction diagram of a data check method according to still another embodiment of this application. As shown in FIG. 5, the data check method may include the following steps.

S501: An SMF entity sends a counter check request (Counter check Request) message to a UPF entity.

Correspondingly, the UPF entity receives the counter check request message.

The counter check request message is used to trigger a counter check procedure, namely, the data check method in this embodiment of this application. The counter check request message includes an identifier QFI of a QoS flow granularity that needs to be checked.

The counter check request message may carry data granularity information of to-be-checked data. Referring to FIG. 5, an identifier [QFI] n of the QoS flow granularity is used as an example for description of the data granularity information.

It should be noted that a trigger condition for the SMF entity to send the counter check request message to the UPF entity may include but is not limited to any one of the following:
a. An uplink data volume and a downlink data volume reach specified values.
b. Periodic check time is reached.
c. A network side is triggered based a specific event.

This step is an optional step. In other words, the data check method in this embodiment of this application may start from S502.

S502: The UPF entity sends a counter check message to the SMF entity.

Correspondingly, the SMF entity receives the counter check message.

The counter check message may carry the data granularity information of the to-be-checked data and a second counter value corresponding to the data granularity information, for example, a [QFI, Count value] n. The count value indicates the uplink data volume or the downlink data volume that is sent or received by the UPF entity based on the data granularity information QFI.

For example, the counter check message includes the following parameters:
a QFI 1, a count value 1; a QFI 2, a count value 2; ...; and a QFI n, a count value n.

It should be noted that a trigger condition for the UPF entity to send the counter check message to the SMF entity is the same as the trigger condition for the SMF entity to send the counter check request message to the UPF entity. Details are not described herein again.

S503: The SMF entity sends the counter check message to an AMF entity.

Correspondingly, the AMF entity receives the counter check message.

S504: The AMF entity sends the counter check message to a gNB.

Correspondingly, the gNB receives the counter check message.

S505: The gNB sends the counter check message to UE.

Correspondingly, the UE receives the counter check message, and parses the counter check message to obtain the [QFI, Count value] n.

S506: The UE obtains a first counter value based on the [QFI] n.

For a specific obtaining manner, refer to the foregoing embodiments. In addition, a manner of counting data on the QoS flow granularity by the UE and the UPF entity is not limited in this embodiment of this application.

S507: The UE determines whether the first counter value matches the second counter value.

This step is the same as S302, and details are not described herein again.

S508: When the first counter value does not match the second counter value, the UE sends a response message to the gNB.

This step is the same as S303, and details are not described herein again.

Correspondingly, the gNB receives the response message.

S509: The gNB sends the response message to the AMF entity.

Correspondingly, the AMF entity receives the response message.

S510: The AMF entity sends the response message to the SMF entity.

Correspondingly, the SMF entity receives the response message.

S511: The SMF entity performs subsequent processing based on the response message.

The subsequent processing includes ending a procedure, releasing a data connection, reporting a data abnormality, and the like. For specific descriptions, refer to the foregoing embodiments. When the data connection is released, the UE and the UPF entity need to be notified.

In Embodiment 1, the SMF entity or the UPF entity triggers a data check procedure, the UPF entity reports the second counter value of the QoS flow granularity, and the UE completes a comparison and a check on counter values corresponding to the [QFI] n reported by the UE and the UPF entity, and then returns the response message to the SMF entity. If the first counter value matches the second counter value, the SMF entity ends the procedure. If the first counter value does not match the second counter value, the SMF entity releases a QoS flow data connection corresponding to the [QFI] n or reports the data abnormality.

Based on Embodiment 1, optionally, the data granularity information may also be an identifier PDU session ID of a PDU session granularity, or the data granularity information may also be an identifier RB ID of an RB granularity, or the like. In this case, content of the counter check message may be as follows:
Counter check (RB ID 1, Count value 1);
Counter check (E-RB ID 1, Count value 1); or
Counter check (PDU session ID 1: QFI 1, Count value 1; QFI 2, Count value 2;).

Corresponding to the foregoing description, the data connection released by the SMF entity is a data connection corresponding to the PDU session ID or a data connection corresponding to the RB ID. Alternatively, the reported data abnormality is a data abnormality corresponding to the PDU session ID, or a data abnormality corresponding to the RB ID.

Optionally, that the SMF entity performs subsequent processing based on the response message may be replaced with any one of the following:
(1) The gNB performs subsequent processing based on the response message;
(2) The AMF entity performs subsequent processing based on the response message; or
(3) The UPF entity performs subsequent processing based on the response message.

This embodiment may further include a case in which a counter value check is performed on data of the PDU session granularity and data of the RB granularity, and also include a case in which the gNB, the AMF entity, and the UPF entity perform the subsequent processing based on a check result.

Main improvements between Embodiment 1 and the prior art are as follows:

The SMF entity or the UPF entity triggers the data check procedure, and the UPF entity counts uplink and downlink data of a granularity (QoS flow/PDU Session/Radio bearer), and reports a data connection identifier and a data counter value to the UE. The UE compares and checks, based on the data connection identifier, the counter value of the UE with the counter value reported by the UPF entity. The SMF entity (or another network element) ends the procedure, releases the data connection, or reports the data abnormality based on a result.

### Embodiment 2

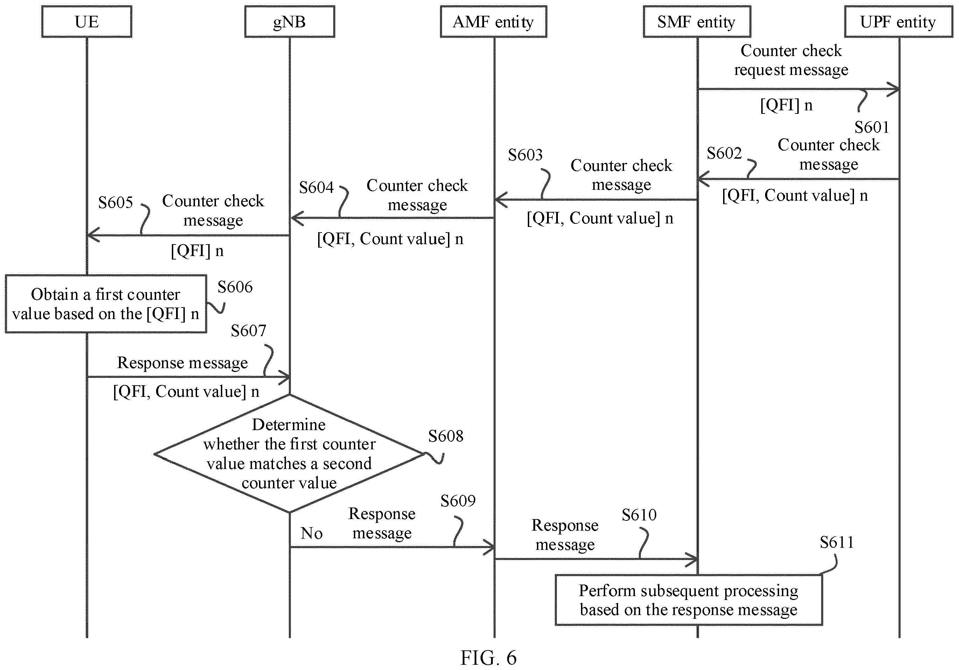

FIG. 6 is a signaling interaction diagram of a data check method according to still another embodiment of this application. As shown in FIG. 6, the data check method may include the following steps.

For S601 to S604, refer to S501 to S504. Details are not described herein again.

After S604, a gNB obtains a second counter value.

S605: The gNB sends a counter check message to UE.

Optionally, the counter check message in this step may be the same as the counter check message in the foregoing steps. Alternatively, the counter check message in this step may be different from the counter check message in the foregoing steps. For example, as shown in FIG. 6, the counter check message in S605 carries a [QFI] n instead of a [QFI, Count value] n. Alternatively, the counter check message in this step may be different from the counter check message in the foregoing steps. The counter check message in S605 does not carry data granularity information, for example, a [QFI] n, and does not carry a [QFI, Count value] n. In this case, the counter check message is used to indicate the UE to report counter values corresponding to all QFIs.

Correspondingly, the UE receives the counter check message, and parses the counter check message to obtain the [QFI] n; or reports the counter values corresponding to all the QFIs, and the counter values include a first counter value corresponding to the [QFI] n.

S606: The UE obtains the first counter value based on the [QFI] n.

Alternatively, the UE reports the counter values corresponding to all the QFIs.

This step is the same as S506, and details are not described herein again.

S607: The UE sends a response message to the gNB.

The response message in this step carries the [QFI] n and the first counter value, for example, the [QFI, Count value] n. Alternatively, the response message may carry the counter values corresponding to all the QFIs. Alternatively, the response message may carry the [QFI] n, the first counter value and the second counter value.

Correspondingly, the gNB receives the response message, and obtains the first counter value carried in the response message.

S608: The gNB determines whether the first counter value matches the second counter value.

This step is the same as S302, and details are not described herein again.

S609: If the first counter value does not match the second counter value, the gNB sends the response message to an AMF entity.

Correspondingly, the AMF entity receives the response message.

The response message in S609 is the same as the response message in S508.

S610: The AMF entity sends the response message to an SMF entity.

Correspondingly, the SMF entity receives the response message.

S611: The SMF entity performs subsequent processing based on the response message.

The subsequent processing includes ending a procedure, releasing a data connection, reporting a data abnormality, and the like. For specific descriptions, refer to the foregoing embodiments. When the data connection is released, the UE and the UPF entity need to be notified.

In Embodiment 2, the SMF entity or the UPF entity triggers a data check procedure, the UE reports a first counter value of a QoS flow granularity, the UPF entity reports a second counter value of the QoS flow granularity, and the gNB completes a comparison and a check on counter values and then returns the response message to the SMF entity. If the first counter value matches the second counter value, the SMF entity ends the procedure. If the first counter value does not match the second counter value, the SMF entity releases a QoS flow data connection corresponding to the [QFI] n or reports the data abnormality.

Based on Embodiment 2, optionally, the data granularity information may also be an identifier PDU session ID of a PDU session granularity, or the data granularity information may also be an identifier RB ID of an RB granularity, or the like. In this case, content of the counter check message may be as follows:
Counter check (RB ID 1, Count value 1);
Counter check (E-RB ID 1, Count value 1); or
Counter check (PDU session ID 1: QFI 1, Count value 1; QFI 2, Count value 2;).

If a format of the counter check message is (PDU session ID 1: QFI 1, Count value 1), the gNB may also receive the PDU session ID from a core network in S604, and send only the received PDU session ID to the UE. The UE reports counter values of all QFIs corresponding to the PDU session ID.

Corresponding to the foregoing description, the data connection released by the SMF entity is a data connection corresponding to the PDU session ID or a data connection corresponding to the RB ID. Alternatively, the reported data abnormality is a data abnormality corresponding to the PDU session ID, or a data abnormality corresponding to the RB ID.

Optionally, that the SMF entity performs subsequent processing based on the response message may be replaced with any one of the following:
(1) The gNB performs subsequent processing based on the response message;
(2) The AMF entity performs subsequent processing based on the response message; or
(3) The UPF entity performs subsequent processing based on the response message.

This embodiment may further include a case in which a counter value check is performed on data of the PDU session granularity and data of the RB granularity, and also include a case in which the gNB, the AMF entity, and the UPF entity perform the subsequent processing based on a check result.

Main improvements between Embodiment 2 and the prior art are as follows:

The SMF entity or the UPF entity triggers the data check procedure, and the UPF entity counts uplink and downlink data of a granularity (QoS flow/PDU Session/Radio bearer), and reports a data connection identifier and a data counter value to the gNB. The gNB compares and checks, based on the data connection identifier, the first counter value reported by the UE and the second counter value reported by the UPF entity. The SMF entity (or another network element) ends the procedure, releases the data connection, or reports the data abnormality based on a result.

### Embodiment 3

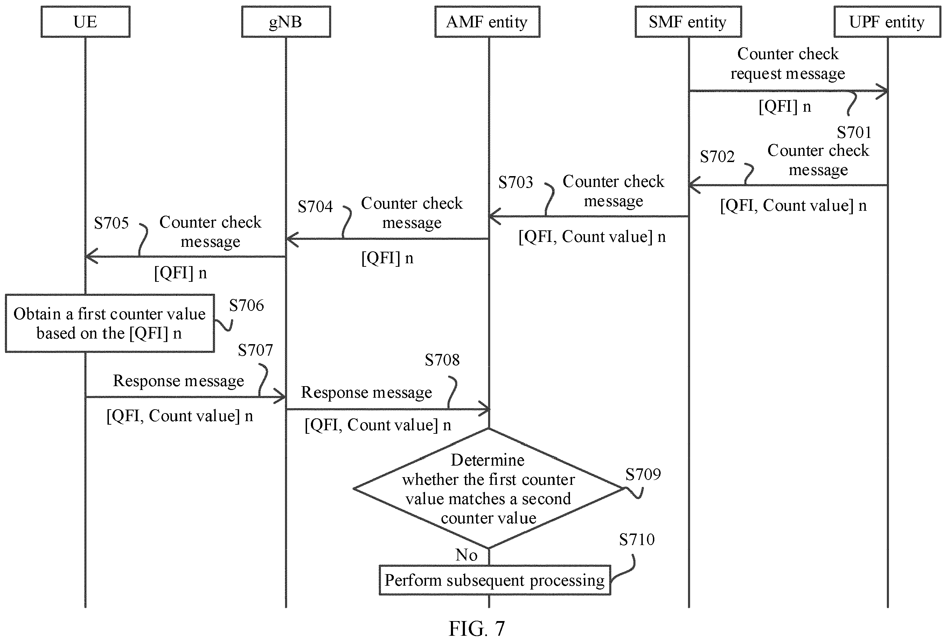

FIG. 7 is a signaling interaction diagram of a data check method according to still another embodiment of this application. As shown in FIG. 7, the data check method may include the following steps.

For S701 to S703, refer to S501 to S503. Details are not described herein again.

After S703, an AMF entity obtains a second counter value.

S704: The AMF entity sends a counter check message to a gNB.

Correspondingly, the gNB receives the counter check message.

This step is similar to S605. The counter check message may be the same as the counter check message in the foregoing steps, and the AMF entity directly sends the counter check message received from an SMF entity. Alternatively, the counter check message in this step may be different from the counter check message in the foregoing steps. For example, as shown in FIG. 7, the counter check message in S704 carries a [QFI] n instead of a [QFI, Count value] n. Alternatively, the counter check message in this step may be different from the counter check message in the foregoing steps. The counter check message in S704 does not carry data granularity information, for example, a [QFI] n, and does not carry a [QFI, Count value] n. In this case, the counter check message is used to indicate the UE to report counter values corresponding to all QFIs.

S705: The gNB sends the counter check message to the UE.

Correspondingly, the UE receives the counter check message.

Corresponding to S704, the UE parses the counter check message to obtain the [QFI] n.

Alternatively, the UE parses the counter check message to obtain the [QFI, Count value] n.

Alternatively, the UE reports the counter values corresponding to all the QFIs, and the counter values include a first counter value corresponding to the [QFI] n.

S706: The UE obtains the first counter value based on the [QFI] n.

This step is the same as S506, and details are not described herein again.

Alternatively, the UE reports the counter values corresponding to all the QFIs.

S707: The UE sends a response message to the gNB.

The response message in this step carries the [QFI] n and the first counter value, for example, the [QFI, Count value] n. Alternatively, the response message may carry the counter values corresponding to all the QFIs. Alternatively, the response message may carry the [QFI] n, the first counter value and the second counter value.

Correspondingly, the gNB receives the response message.

S708: The gNB sends the response message to the AMF entity.

Correspondingly, the AMF entity receives the response message, and obtains the first counter value carried in the response message.

S709: The AMF entity determines whether the first counter value matches the second counter value.

This step is the same as S302, and details are not described herein again.

Optionally, when the first counter value matches the second counter value, the AMF entity ends a data check procedure.

S710: When the first counter value does not match the second counter value, the AMF performs subsequent processing.

The subsequent processing includes ending the procedure, releasing a data connection, reporting a data abnormality, and the like. For specific descriptions, refer to the foregoing embodiments. When the data connection is released, the UE and a UPF entity need to be notified. When reporting the data abnormality, the AMF entity notifies a core network element (for example, the SMF entity) and an external device (for example, an O&M server) that manages a data volume of a counter value difference for further analysis.

In Embodiment 3, the SMF entity or the UPF entity triggers the data check procedure, the UE reports a first counter value of a QoS flow granularity, the UPF entity reports a second counter value of the QoS flow granularity, and the AMF completes a comparison and a check on counter values. If the first counter value matches the second counter value, the AMF entity ends the procedure. If the first counter value does not match the second counter value, the AMF entity releases a QoS flow data connection corresponding to the [QFI] n or reports the data abnormality.

In Embodiment 3, when the first counter value does not match the second counter value, the AMF entity sends the response message to the SMF entity. The response message is the same as the response message in S508. Correspondingly, the SMF entity receives the response message and performs subsequent processing based on the response message. The subsequent processing includes ending the procedure, releasing the data connection, reporting the data abnormality, and the like. For specific descriptions, refer to the foregoing embodiments. When the data connection is released, the UE and the UPF entity need to be notified.

Alternatively, when the first counter value does not match the second counter value, the AMF entity sends the response message to the SMF entity. The response message is the same as the response message in S508. Correspondingly, the SMF entity receives the response message and forwards the response message to the UPF entity. The UPF entity further performs subsequent processing based on the response message. The subsequent processing includes ending the procedure, releasing the data connection, reporting the data abnormality, and the like. For specific descriptions, refer to the foregoing embodiments. When the data connection is released, the UE and the UPF entity need to be notified.

Based on Embodiment 3, optionally, the data granularity information may also be an identifier PDU session ID of a PDU session granularity, the data granularity information may also be an identifier RB ID of an RB granularity, or the like. In this case, content of the counter check message may be as follows:
Counter check (RB ID 1, Count value 1);
Counter check (E-RB ID 1, Count value 1); or
Counter check (PDU session ID 1: QFI 1, Count value 1; QFI 2, Count value 2;).

If a format of the counter check message is (PDU session ID 1: QFI 1, Count value 1), the AMF entity may also receive the PDU session ID from the SMF entity in S703, and send only the received PDU session ID to the UE. The UE reports counter values of all QFIs corresponding to the PDU session ID.

Corresponding to the foregoing description, the data connection released by the AMF entity is a data connection corresponding to the PDU session ID or a data connection corresponding to the RB ID. Alternatively, the reported data abnormality is a data abnormality corresponding to the PDU session ID, or a data abnormality corresponding to the RB ID.

This embodiment may further include a case in which a counter value check is performed on data of the PDU session granularity and data of the RB granularity, and also include a case in which the SMF entity and the UPF entity perform the subsequent processing based on a check result.

Main improvements between Embodiment 3 and the prior art are as follows:

The SMF entity or the UPF entity triggers the data check procedure, and the UPF entity counts uplink and downlink data of a granularity (QoS flow/PDU Session/Radio bearer), and reports a data connection identifier and a data counter value to the AMF entity. The AMF entity compares and checks, based on the data connection identifier, the first counter value reported by the UE and the second counter value reported by the UPF entity. The AMF entity (or another network element) ends the procedure, releases the data connection, or reports the data abnormality based on a result.

### Embodiment 4

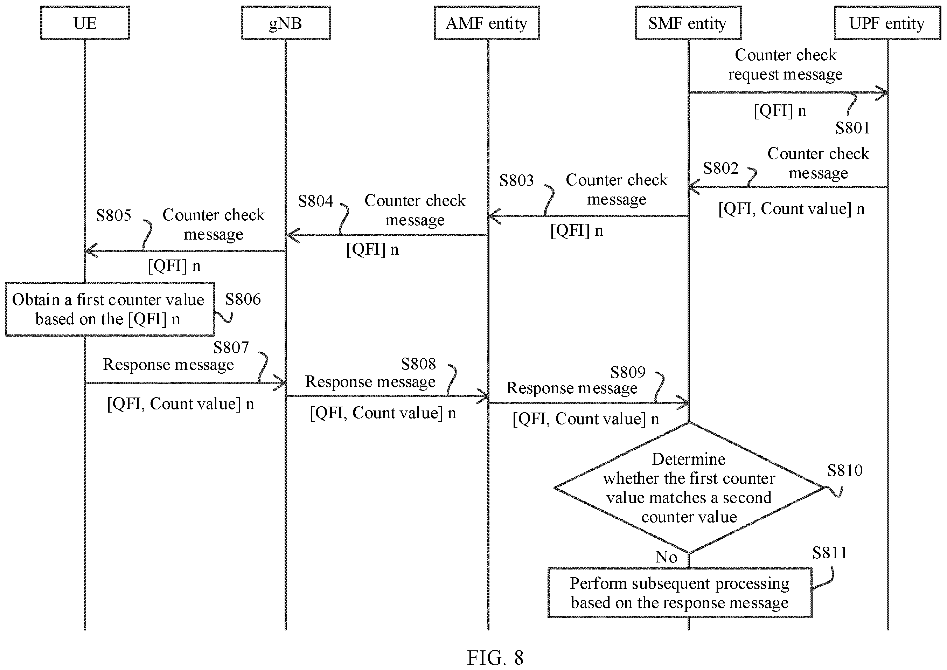

FIG. 8 is a signaling interaction diagram of a data check method according to still another embodiment of this application. As shown in FIG. 8, the data check method may include the following steps.

For S801 and S802, refer to S501 and S502. Details are not described herein again.

After S802, an SMF entity obtains a second counter value.

S803: The SMF entity sends a counter check message to an AMF entity.

Correspondingly, the AMF entity receives the counter check message.

This step is similar to S605. The counter check message may be the same as the counter check message in the foregoing steps, and the SMF entity directly sends the counter check message received from a UPF entity. Alternatively, the counter check message in this step may be different from the counter check message in the foregoing steps. For example, as shown in FIG. 8, the counter check message in S803 carries a [QFI] n instead of a [QFI, Count value] n. Alternatively, the counter check message in this step may be different from the counter check message in the foregoing steps. The counter check message in S803 does not carry data granularity information, for example, a [QFI] n, and does not carry a [QFI, Count value] n. In this case, the counter check message is used to indicate the UE to report counter values corresponding to all QFIs.

S804: The AMF entity sends the counter check message to a gNB.

Correspondingly, the gNB receives the counter check message.

S805: The gNB sends the counter check message to the UE.

Correspondingly, the UE receives the counter check message.

Corresponding to S803, the UE parses the counter check message to obtain the [QFI] n.

Alternatively, the UE parses the counter check message to obtain the [QFI, Count value] n.

Alternatively, the UE reports the counter values corresponding to all the QFIs, and the counter values include a first counter value corresponding to the [QFI] n.

S806: The UE obtains the first counter value based on the [QFI] n.

This step is the same as S506, and details are not described herein again.

Alternatively, the UE reports the counter values corresponding to all the QFIs.

S807: The UE sends a response message to the gNB.

The response message in this step carries the [QFI] n and the first counter value, for example, the [QFI, Count value] n. Alternatively, the response message may carry the counter values corresponding to all the QFIs, and the counter values include the first counter value. Alternatively, the response message may carry the [QFI] n, the first counter value and the second counter value.

Correspondingly, the gNB receives the response message.

S808: The gNB sends the response message to the AMF entity.

Correspondingly, the AMF entity receives the response message.

S809: The AMF entity sends the response message to the SMF entity.

Correspondingly, the SMF entity receives the response message, and obtains the first counter value carried in the response message.

S810: The SMF entity determines whether the first counter value matches the second counter value.

This step is the same as S302, and details are not described herein again.

Optionally, when the first counter value matches the second counter value, the SMF entity ends a data check procedure.

S811: When the first counter value does not match the second counter value, the SMF performs subsequent processing.

The subsequent processing includes ending the procedure, releasing a data connection, reporting a data abnormality, and the like. For specific descriptions, refer to the foregoing embodiments. When the data connection is released, the UE and the UPF entity need to be notified.

In Embodiment 4, the SMF entity or the UPF entity triggers the data check procedure, the UE reports a first counter value of a QoS flow granularity, the UPF entity reports a second counter value of the QoS flow granularity, and the SMF completes a comparison and a check on counter values. If the first counter value matches the second counter value, the SMF entity ends the procedure. If the first counter value does not match the second counter value, the SMF entity releases a QoS flow data connection corresponding to the [QFI] n or reports the data abnormality.

In Embodiment 4, when the first counter value does not match the second counter value, the SMF entity sends the response message to the UPF entity. The UPF entity further performs subsequent processing based on the response message. The subsequent processing includes ending the procedure, releasing the data connection, reporting the data abnormality, and the like. For specific descriptions, refer to the foregoing embodiments. When the data connection is released, the UE and the UPF entity need to be notified.

Based on Embodiment 4, optionally, the data granularity information may also be an identifier PDU session ID of a PDU session granularity, the data granularity information may also be an identifier RB ID of an RB granularity, or the like. In this case, content of the counter check message may be as follows:
Counter check (RB ID 1, Count value 1);
Counter check (E-RB ID 1, Count value 1); or
Counter check (PDU session ID 1: QFI 1, Count value 1; QFI 2, Count value 2;).

If a format of the counter check message is (PDU session ID 1: QFI 1, Count value 1), the SMF entity may also receive the PDU session ID from the UPF entity in S802, and send only the received PDU session ID to the UE. The UE reports counter values of all QFIs corresponding to the PDU session ID.

Corresponding to the foregoing description, the data connection released by the SMF entity is a data connection corresponding to the PDU session ID or a data connection corresponding to the RB ID. Alternatively, the reported data abnormality is a data abnormality corresponding to the PDU session ID, or a data abnormality corresponding to the RB ID.

This embodiment may further include a case in which a counter value check is performed on data of the PDU session granularity and data of the RB granularity, and also include a case in which the UPF entity performs the subsequent processing based on a check result.

Main improvements between Embodiment 4 and the prior art are as follows:

The SMF entity or the UPF entity triggers the data check procedure, and the UPF entity counts uplink and downlink data of a granularity (QoS flow/PDU Session/Radio bearer), and reports a data connection identifier and a data counter value to the SMF entity. The SMF entity compares and checks, based on the data connection identifier, the first counter value reported by the UE and the second counter value reported by the UPF entity. The SMF entity (or another network element) ends the procedure, releases the data connection, or reports the data abnormality based on a result.

### Embodiment 5

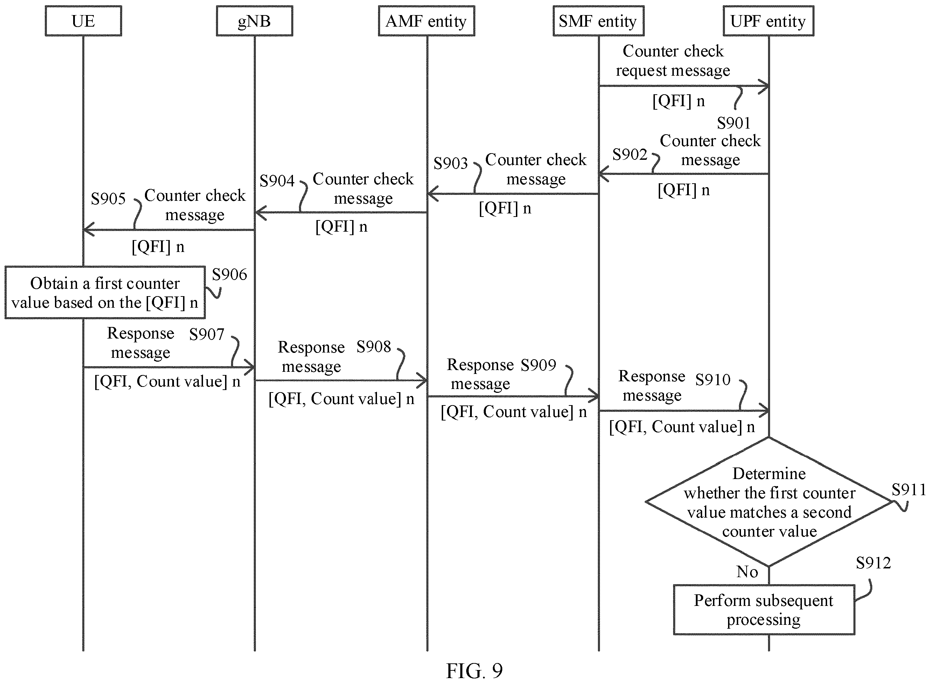

FIG. 9 is a signaling interaction diagram of a data check method according to still another embodiment of this application. As shown in FIG. 9, the data check method may include the following steps.

S901: An SMF entity sends a counter check request message to a UPF entity.

This step is the same as S501, and details are not described herein again.

S902: The UPF entity sends a counter check message to the SMF entity.

Correspondingly, the SMF entity receives the counter check message. For example, the counter check message carries a [QFI] n.

Different from S502, in this embodiment of this application, because the UPF performs a comparison and a check, the counter check message in this step may carry a second counter value, or the counter check message in this step may not carry a second counter value.

S903: The SMF entity sends the counter check message to an AMF entity.

Correspondingly, the AMF entity receives the counter check message.

S904: The AMF entity sends the counter check message to a gNB.

Correspondingly, the gNB receives the counter check message.

S905: The gNB sends the counter check message to UE.

Correspondingly, the UE receives the counter check message.

Corresponding to S902, the UE parses the counter check message to obtain the [QFI] n.

Alternatively, the UE parses the counter check message to obtain the [QFI, Count value] n.

Alternatively, the UE reports counter values corresponding to all QFIs, and the counter values include a first counter value corresponding to the [QFI] n.

S906: The UE obtains the first counter value based on the [QFI] n.

This step is the same as S506, and details are not described herein again.

Alternatively, the UE reports the counter values corresponding to all the QFIs, and the counter values include the first counter value.

S907: The UE sends a response message to the gNB.

The response message in this step carries the [QFI] n and the first counter value, for example, the [QFI, Count value] n. Alternatively, the response message may carry the counter values corresponding to all the QFIs, and the counter values include the first counter value. Alternatively, the response message may carry the [QFI] n, the first counter value and the second counter value.

Correspondingly, the gNB receives the response message.

S908: The gNB sends the response message to the AMF entity.

Correspondingly, the AMF entity receives the response message.

S909: The AMF entity sends the response message to the SMF entity.

Correspondingly, the SMF entity receives the response message.

S910: The SMF entity sends the response message to the UPF entity.

Correspondingly, the UPF entity receives the response message, and obtains the first counter value carried in the response message.

Because the UPF entity may obtain the second counter value through S902, before performing S911, the UPF entity obtains the second counter value.

S911: The UPF entity determines whether the first counter value matches the second counter value.

This step is the same as S302, and details are not described herein again.

Optionally, when the first counter value matches the second counter value, the UPF entity ends a data check procedure.

S912: When the first counter value does not match the second counter value, the UPF performs subsequent processing.

The subsequent processing includes ending the procedure, releasing a data connection, reporting a data abnormality, and the like. For specific descriptions, refer to the foregoing embodiments. When the data connection is released, the UE needs to be notified.

In Embodiment 5, the SMF entity or the UPF entity triggers the data check procedure, the UE reports a first counter value of a QoS flow granularity, the UPF entity completes a comparison and a check on the first counter value and the second counter value. If the first counter value matches the second counter value, the UPF entity ends the procedure. If the first counter value does not match the second counter value, the UPF entity releases a QoS flow data connection corresponding to the [QFI] n or reports the data abnormality.

In Embodiment 5, when the first counter value does not match the second counter value, the UPF entity sends the response message to the SMF entity. The SMF entity further performs subsequent processing based on the response message. The subsequent processing includes ending the procedure, releasing a data connection, reporting a data abnormality, and the like. For specific descriptions, refer to the foregoing embodiments. When the data connection is released, the UE and the UPF entity need to be notified.

Based on Embodiment 5, optionally, data granularity information may also be an identifier PDU session ID of a PDU session granularity, or data granularity information may also be an identifier RB ID of an RB granularity, or the like. In this case, content of the counter check message may be as follows:
Counter check (RB ID 1, Count value 1);
Counter check (E-RB ID 1, Count value 1); or
Counter check (PDU session ID 1: QFI 1, Count value 1; QFI 2, Count value 2;).

If a format of the counter check message is (PDU session ID 1: QFI 1, Count value 1), the UPF entity sends the PDU session ID to the UE in S901. The UE reports counter values of all QFIs corresponding to the PDU session ID.

Corresponding to the foregoing description, the data connection released by the UPF entity is a data connection corresponding to the PDU session ID or a data connection corresponding to the RB ID. Alternatively, the reported data abnormality is a data abnormality corresponding to the PDU session ID, or a data abnormality corresponding to the RB ID.

This embodiment may further include a case in which a counter value check is performed on data of the PDU session granularity and data of the RB granularity, and also include a case in which the SMF entity performs the subsequent processing based on a check result.

Main improvements between Embodiment 5 and the prior art are as follows:

The SMF entity or the UPF entity triggers the data check procedure, and the UPF entity counts uplink and downlink data of a granularity (QoS flow/PDU Session/Radio bearer), and sends a data connection identifier to the UE. The UPF entity compares, based on the data connection identifier, the second counter value of the UPF entity and the first counter value reported by the UE. The UPF entity (or another network element) ends the procedure, releases the data connection, or reports the data abnormality based on a result.

In the foregoing embodiment, when the foregoing trigger condition is met, the SMF entity or the UPF entity triggers the data check procedure. Different from the foregoing embodiments, the following embodiments may be further used to trigger the data check procedure.

### Embodiment 6

A UPF entity triggers a data check procedure by using a charging procedure. Specifically, the UPF entity reports a charging message to an SMF entity, and the charging message carries a charging identifier parameter and a counter value corresponding to the charging identifier parameter. The charging identifier parameter is, for example, a charging key. The SMF entity sums all counter values to obtain a counter value of a PDU session granularity. A subsequent procedure is the same as the data check procedure of the PDU session granularity in Embodiment 1 to Embodiment 5. It should be noted that a QoS flow granularity corresponds to at least one charging identifier parameter.

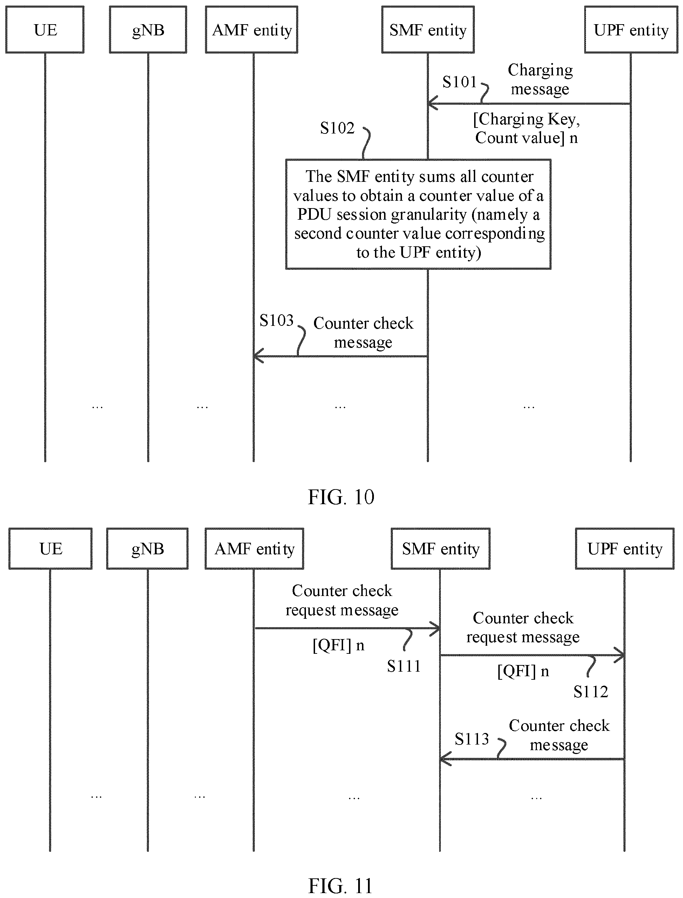

FIG. 10 is a signaling interaction diagram of a data check method according to still another embodiment of this application. As shown in FIG. 10, the data check method may include the following steps.

S101: The UPF entity sends the charging message to the SMF entity.

The charging message carries the charging identifier parameter and the counter value corresponding to the charging identifier parameter.

For example, a message format of the charging message may be:
[Charging Key, Count value] n: Charging Key 1, Count value 1; Charging Key 2, Count value 2; ...; and Charging Key n, Count value n.

Correspondingly, the SMF entity receives the charging message.

S102: The SMF entity sums all the counter values to obtain the counter value of the PDU session granularity (namely a second counter value corresponding to the UPF entity).

S103: The SMF entity sends a counter check message to an AMF entity.

In this embodiment, procedures after S102 are similar to the data check procedures of the PDU session granularity in Embodiment 1 to Embodiment 5. A difference is that a data check in this embodiment is based on the PDU session granularity.

Based on the foregoing description, there are the following possibilities.

Possibility 1: Different QFIs have different packet (packet) statistics, for example, a QFI 1: Charging Key 1-counter 1 and Charging Key 2-counter 2; and a QFI 2: Charging Key 1-counter 3 and a Charging Key 3-counter 4.

Alternatively, different QFIs have a same charging key.

Possibility 2: After data matching is completed, processing on a matching result may also be performed on the AMF entity, the SMF entity, or the UPF entity. For example, after performing the data check, the AMF entity releases a data connection, or notifies the SMF entity to release the data connection. The response message includes a corresponding QFI, a corresponding RB ID, or a corresponding PDU session ID. For another example, after performing the data check, the SMF entity releases the data connection, or notifies the AMF entity to release the data connection. The response message includes the corresponding QFI, the corresponding RB ID, or the corresponding PDU session ID. For another example, after performing the data check, the UPF entity releases the data connection, or notifies the SMF entity to release the data connection. A notification message includes the corresponding QFI, the corresponding RB ID, or the corresponding PDU session ID. When the data connection is released, the UE and the UPF entity need to be notified.

Main improvements between Embodiment 6 and the prior art are as follows:

The UPF entity triggers the data check procedure by using the charging procedure, counts uplink and downlink data corresponding to the charging identifier parameter, and sends counter values to the SMF entity. The SMF entity sums the counter values to obtain the second counter value of the PDU session granularity. Subsequent procedures are the same as the data check procedure of the PDU session granularity in Embodiment 1 to Embodiment 5.

### Embodiment 7

An AMF entity triggers a data check procedure. The AMF entity sends a counter check request message carrying a QFI to a UPF entity (S112) by using an SMF entity (S111). The UPF entity sends a counter check message to the SMF entity (S113). For details, refer to FIG. 11. Subsequent procedures are the same as those in Embodiment 1 to Embodiment 5, and details are not described herein again.

It should be further noted that in this embodiment, there is no strict limitation on a message sequence and a message direction.

### Embodiment 8

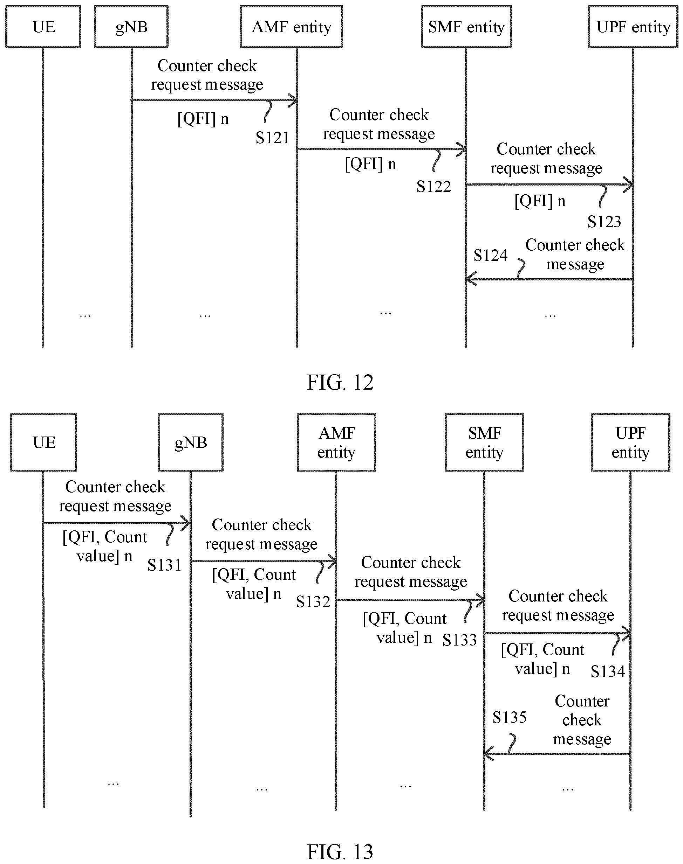

A gNB triggers a data check procedure. The gNB sends a counter check request message carrying a QFI to a UPF entity (5123) by using an AMF entity (S121) and an SMF entity (S122). The UPF entity sends a counter check message to the SMF entity (S124). For details, refer to FIG. 12. Subsequent procedures are the same as those in Embodiment 1 to Embodiment 5, and details are not described herein again.

It should be further noted that in this embodiment, there is no strict limitation on a message sequence and a message direction.

### Embodiment 9

UE triggers a data check procedure. The UE sends a counter check message ([QFI, Count value] n) carrying a QFI and a first counter value to a UPF entity (S134) by using a gNB (S131), an AMF entity (S132) and an SMF entity (S133). The UPF entity sends a counter check message to the SMF entity (S135). For details, refer to FIG. 13. Subsequent procedures are the same as those in Embodiment 1 to Embodiment 5, and details are not described herein again.

It should be further noted that in this embodiment, there is no strict limitation on a message sequence and a message direction.

In conclusion, this embodiment of this application provides a data check method, and the data check method has at least the following beneficial effects:
(a) In this application, in a scenario in which user plane security termination point is on the UPF, a procedure of periodically checking counters of uplink and downlink data packets between the UE and the UPF entity is added, to ensure that quantities of uplink and downlink data packets sent/received by the UE and the UPF entity are consistent, and prevent an attacker from maliciously increasing or decreasing user plane data.
(b) This application includes a comparison and a check on data of various granularities (QoS flow/PDU Session/Radio bearer/Charging Key), so that a data check granularity may be more flexibly determined based on a specific scenario.

The foregoing describes in detail the data check method provided in the embodiments of this application. The following describes a data check apparatus in the embodiments of this application.

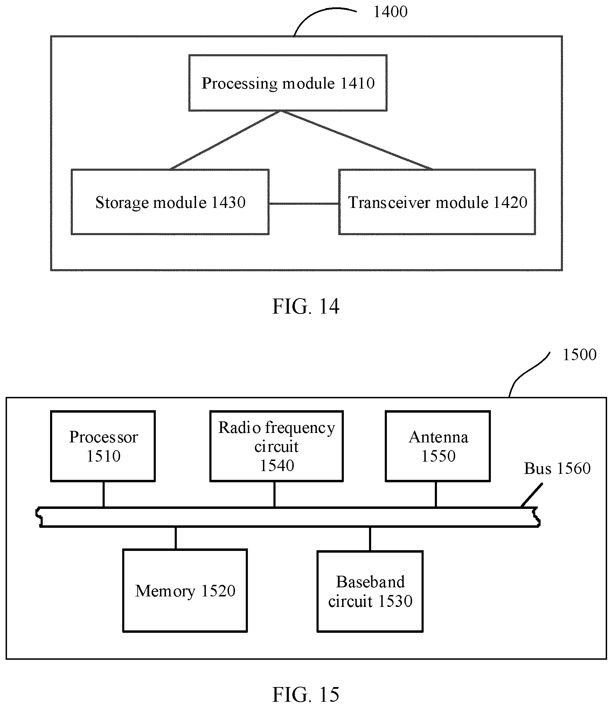

In an example, FIG. 14 is a schematic block diagram of a data check apparatus according to an embodiment of this application. The data check apparatus 1400 in this embodiment of this application may be the UE in the foregoing method embodiments, or may be one or more chips in the UE. The data check apparatus 1400 may be configured to perform some or all functions of the UE in the foregoing method embodiments. The data check apparatus 1400 may include a processing module 1410 and a transceiver module 1420. Optionally, the data check apparatus 1400 may further include a storage module 1430.

For example, the processing module 1410 is configured to: perform the foregoing method embodiments to obtain a first counter value and a second counter value, where the first counter value is a value obtained by performing counting by the UE during data transmission between the UE and a UPF entity, and the second counter value is a value obtained by performing counting by the UPF entity during the data transmission between the UE and the UPF entity; and determine whether the first counter value matches the second counter value. The transceiver module 1420 is configured to: if the first counter value does not match the second counter value, send a response message to a session management network element.

Alternatively, the data check apparatus 1400 may also be configured as a universal processing system. For example, the universal processing system is usually referred to as a chip. The processing module 1410 may include one or more processors that provide a processing function. The transceiver module 1420 may be, for example, an input/output interface, a pin, or a circuit. The input/output interface may be used for information interaction between the chip and the outside. For example, the input/output interface may output a matching result obtained by the processing module 1410 to another module outside the chip for processing. The processing module 1410 may execute a computer execution instruction stored in the storage module 1430, to implement functions of the UE in the foregoing method embodiments. In an example, the optionally included storage module 1430 in the data check apparatus 1400 may be a storage unit in the chip, such as a register or a cache. The storage module 1430 may also be a storage unit that is inside the UE and that is located outside the chip, such as a read-only memory (read-only memory, ROM) or another type of static storage device that can store static information and an instruction, or a random access memory (random access memory, RAM).

In another example, FIG. 15 is a schematic block diagram of a data check apparatus according to another embodiment of this application. The data check apparatus 1500 in this embodiment of this application may be the UE in the foregoing method embodiments, and the data check apparatus 1500 may be configured to perform some or all functions of the UE in the foregoing method embodiments. The data check apparatus 1500 may include a processor 1510, a baseband circuit 1530, a radio frequency circuit 1540, and an antenna 1550. Optionally, the data check apparatus 1500 may further include a memory 1520. Each component of the apparatus 1500 is coupled together by using a bus 1560. The bus system 1560 includes a data bus, and further includes a power bus, a control bus, and a status signal bus. However, for clear description, various types of buses in the figure are marked as the bus system 1560.

The processor 1510 may be configured to: control the UE; perform processing that is performed by the UE in the foregoing embodiments; and perform processing processes related to the UE in the foregoing method embodiments and/or another process of the technology described in this application. The processor 1510 may further run an operating system, manage the bus, and execute a program or an instruction stored in the memory.

The baseband circuit 1530, the radio frequency circuit 1540, and the antenna 1550 may be configured to support information receiving and sending between the UE and another network element in the foregoing embodiments, so as to support wireless communication between the UE and the another network element.

The memory 1520 may be configured to store program code and data of a transmitting end, and the memory 1520 may be the storage module 1530 in FIG. 15. It may be understood that the baseband circuit 1530, the radio frequency circuit 1540, and the antenna 1550 may be further configured to support communication between the UE and another network entity, for example, communication between the UE and the another network element. The memory 1520 in FIG. 15 is shown as being separated from the processor 1510. However, a person skilled in the art easily understands that the memory 1520 or any part of the memory 1520 may be located outside the data check apparatus 1500. For example, the memory 1520 may include a transmission cable and/or a computer product separated from a wireless node. These media may be accessed by the processor 1510 by using the bus interface 1560. Alternatively, the memory 1520 or any portion thereof may be integrated into the processor 1510. For example, the memory 1520 or any portion thereof may be a cache and/or a general purpose register.

It may be understood that FIG. 15 shows only a simplified design of the UE. For example, in a practical application, the UE may include any quantity of transmitters, receivers, processors, memories, and the like, and all UEs that can implement this application fall within the protection scope of this application.

In a possible implementation, the data check apparatus on the UE may also be implemented by using the following: one or more field-programmable gate arrays (field-programmable gate array, FPGA), a programmable logic device (programmable logic device, PLD), a controller, a state machine, gate logic, a discrete hardware component, any other suitable circuit, or any combination of circuits that can perform various functions described in this application. In still another example, the embodiments of this application further provide a computer storage medium. The computer storage medium may store a program instruction used to indicate any one of the foregoing methods, so that a processor executes the program instruction to implement the methods and the functions in the foregoing method embodiments.

In a possible implementation, the data check apparatus may also be the SMF entity, the gNB, the AMF entity, or the UPF entity in the foregoing method embodiments, or may be one or more chips inside the SMF entity, the gNB, the AMF entity, or the UPF entity. Other descriptions are similar to the related descriptions of the UE in the foregoing method embodiments, and details are not described herein again.

In a possible implementation, the data check apparatus may also be implemented by using the following: one or more field-programmable gate arrays (field-programmable gate array, FPGA), a programmable logic device (programmable logic device, PLD), a controller, a state machine, gate logic, a discrete hardware component, any other suitable circuit, or any combination of circuits that can perform various functions described in this application.

In still another example, the embodiments of this application further provide a computer-readable storage medium. The computer-readable storage medium may store a program instruction used to indicate any one of the foregoing methods, so that a processor executes the program instruction to implement the methods and functions related to the UE, the SMF entity, the gNB, the AMF entity, or the UPF entity in the foregoing method embodiments.

The processor in the data check apparatus 1500 may be a general-purpose processor, for example, a general-purpose central processing unit (Central Processing Unit, CPU), a network processor (Network Processor, NP), or a microprocessor. The processor may also be an application-specific integrated circuit (application-specific integrated circuit, ASIC), or one or more integrated circuits configured to control program execution in the solutions of this application. The processor may also be a digital signal processor (Digital Signal Processor, DSP), a field-programmable gate array (Field-Programmable Gate Array, FPGA) or another programmable logic device, a discrete gate or a transistor logic device, or a discrete hardware component. Alternatively, a controller/the processor may be a combination of processors implementing a computing function, for example, a combination of one or more microprocessors, or a combination of the DSP and a microprocessor. The processor usually performs logical and arithmetic operations based on a program instruction stored in the memory.

The memory in the data check apparatus 1500 may further store an operating system and another application program. Specifically, the program may include program code, and the program code includes a computer operation instruction. More specifically, the memory may be a read-only memory (read-only memory, ROM), another type of static storage device that can store static information and an instruction, a random access memory (random access memory, RAM), another type of dynamic storage device that can store information and the instruction, a magnetic disk memory, or the like. The memory may be a combination of the foregoing memories. In addition, the computer-readable storage medium/memory may be located in the processor, or may be located outside the processor, or distributed in a plurality of entities including a processor or a processing circuit. The computer-readable storage medium/memory may be specifically embodied in a computer program product. For example, the computer program product may include a computer-readable medium in a packaging material.

The embodiments of this application further provide a computer-readable storage medium. The computer-readable storage medium stores a computer program, the computer program includes at least one piece of code, and the at least one piece of code may be executed by a computer, to control the computer to perform the method according to any one of the foregoing embodiments.

The embodiments of this application further provide a chip, including a processing module and a communications interface. The processing module can perform the method procedure in any one of the foregoing method embodiments. Further, the chip may further include a storage module (for example, a memory). The storage module is configured to store an instruction, the processing module is configured to execute the instruction stored in the storage module, and execution of the instruction stored in the storage module enables the processing module to perform the method procedure in any one of the foregoing method embodiments.

The embodiments of this application provide a program or a computer program product including a program instruction. When the program instruction is executed by a processor, the processor is enabled to implement the method procedure in any one of the foregoing method embodiments.

All or some of the program instructions may be stored in a storage medium that is encapsulated with the processor, or all or some of the program instructions may be stored in a memory that is not encapsulated with the processor.

Optionally, the processor may be a chip.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

## Claims

1. A data check method, the method **characterized by**:
obtaining a first counter value and a second counter value, wherein the first counter value is a value obtained by performing counting by user equipment, UE, during data transmission between the UE and a user plane function, UPF, entity, and the second counter value is a value obtained by performing counting by the UPF entity during the data transmission between the UE and the UPF entity;
determining whether the first counter value matches the second counter value; and
if the first counter value does not match the second counter value, sending a response message to a session management network element.

2. The method according to claim 1, wherein the response message is used to indicate that the first counter value does not match the second counter value.

3. The method according to claim 1 or 2, wherein if the first counter value does not match the second counter value, the response message comprises at least one of data granularity information, the first counter value, and the second counter value.

4. The method according to any one of claims 1 to 3, wherein the determining whether the first counter value matches the second counter value comprises:
when a difference between the first counter value and the second counter value is greater than a preset value, determining that the first counter value does not match the second counter value.

5. The method according to any one of claims 1 to 3, wherein the determining whether the first counter value matches the second counter value comprises:
when a high-order part of the first counter value is different from a high-order part of the second counter value, determining that the first counter value does not match the second counter value.

6. A data check apparatus, the apparatus **characterized by** comprising:
a processing module (1410), configured to: obtain a first counter value and a second counter value, wherein the first counter value is a value obtained by performing counting by user equipment, UE, during data transmission between the UE and a user plane function, UPF, entity, and the second counter value is a value obtained by performing counting by the UPF entity during the data transmission between the UE and the UPF entity; and determine whether the first counter value matches the second counter value; and
a transceiver module (1420), configured to: if the first counter value does not match the second counter value, send a response message to a session management network element.

7. The apparatus according to claim 6, wherein the response message is used to indicate that the first counter value does not match the second counter value.

8. The apparatus according to claim 6 or 7, wherein if the first counter value does not match the second counter value, the response message comprises at least one of data granularity information, the first counter value, and the second counter value.

9. A data check apparatus, comprising a transceiver and a processor, wherein
the transceiver is configured to support communication between the data check apparatus and a session management network element, and receive and send information or an instruction according to any one of claims 1 to 5; and
the processor is configured to support the data check apparatus in performing the method according to any one of claims 1 to 5.

10. A computer-readable storage medium, wherein the computer-readable storage medium stores a computer program, the computer program comprises at least one piece of code, and the at least one piece of code when executed by a computer causes the computer to carry out the method according to any of claims 1 to 5.

## Patentansprüche

1. Verfahren zur Datenprüfung, wobei das Verfahren **gekennzeichnet ist durch**:
Erhalten eines ersten Zählerwerts und eines zweiten Zählerwerts, wobei der erste Zählerwert ein Wert ist, der **durch** Ausführen einer Zählung **durch** Benutzer-Equipment, UE ("User Equipment"), während einer Datenübertragung zwischen dem UE und einer Benutzerebenenfunktion, UPF ("User Plane Function"), -Einheit erhalten wird, und der zweite Zählerwert ein Wert ist, der **durch** Ausführen einer Zählung **durch** die UPF-Einheit während der Datenübertragung zwischen dem UE und der UPF-Einheit erhalten wird,
Bestimmen, ob der erste Zählerwert mit dem zweiten Zählerwert übereinstimmt, und
wenn der erste Zählerwert nicht mit dem zweiten Zählerwert übereinstimmt, Senden einer Antwortnachricht an ein Sitzungsverwaltungs-Netzelement.

2. Verfahren gemäß Anspruch 1, wobei die Antwortnachricht verwendet wird, um anzuzeigen, dass der erste Zählerwert nicht mit dem zweiten Zählerwert übereinstimmt.

3. Verfahren gemäß Anspruch 1 oder 2, wobei, wenn der erste Zählerwert nicht mit dem zweiten Zählerwert übereinstimmt, die Antwortnachricht Informationen über die Datengranularität und/oder den ersten Zählerwert und/oder den zweiten Zählerwert umfasst.

4. Verfahren gemäß einem der Ansprüche 1 bis 3, wobei das Bestimmen, ob der erste Zählerwert mit dem zweiten Zählerwert übereinstimmt, umfasst:
wenn eine Differenz zwischen dem ersten Zählerwert und dem zweiten Zählerwert größer als ein voreingestellter Wert ist, Bestimmen, dass der erste Zählerwert nicht mit dem zweiten Zählerwert übereinstimmt.

5. Verfahren gemäß einem der Ansprüche 1 bis 3, wobei das Bestimmen, ob der erste Zählerwert mit dem zweiten Zählerwert übereinstimmt, umfasst:
wenn sich ein höherwertiger Teil des ersten Zählerwerts von einem höherwertigen Teil des zweiten Zählerwerts unterscheidet, Bestimmen, dass der erste Zählerwert nicht mit dem zweiten Zählerwert übereinstimmt.

6. Einrichtung zur Datenprüfung, wobei die Einrichtung **dadurch gekennzeichnet ist, dass** sie umfasst:
ein Verarbeitungsmodul (1410), das ausgelegt ist zum: Erhalten eines ersten Zählerwerts und eines zweiten Zählerwerts, wobei der erste Zählerwert ein Wert ist, der durch Ausführen einer Zählung durch Benutzer-Equipment, UE ("User Equipment"), während einer Datenübertragung zwischen dem UE und einer Benutzerebenenfunktion, UPF ("User Plane Function"), -Einheit erhalten wird, und der zweite Zählerwert ein Wert ist, der durch Ausführen einer Zählung durch die UPF-Einheit während der Datenübertragung zwischen dem UE und UPF-Einheit erhalten wird, und Bestimmen, ob der erste Zählerwert mit dem zweiten Zählerwert übereinstimmt, und
ein Sendeempfängermodul (1420), das ausgelegt ist zum: wenn der erste Zählerwert nicht mit dem zweiten Zählerwert übereinstimmt, Senden einer Antwortnachricht an ein Sitzungsverwaltungs-Netzelement.

7. Einrichtung gemäß Anspruch 6, wobei die Antwortnachricht verwendet wird, um anzuzeigen, dass der erste Zählerwert nicht mit dem zweiten Zählerwert übereinstimmt.

8. Einrichtung gemäß Anspruch 6 oder 7, wobei, wenn der erste Zählerwert nicht mit dem zweiten Zählerwert übereinstimmt, die Antwortnachricht Informationen über die Datengranularität und/oder den ersten Zählerwert und/oder den zweiten Zählerwert umfasst.

9. Einrichtung zur Datenprüfung, die einen Sendeempfänger und einen Prozessor umfasst, wobei
der Sendeempfänger dafür ausgelegt ist, Kommunikation zwischen der Einrichtung zur Datenprüfung und einem Sitzungsverwaltungs-Netzelement zu unterstützen und Informationen oder eine Anweisung gemäß einem der Ansprüche 1 bis 5 zu empfangen bzw. zu senden; und
der Prozessor dafür ausgelegt ist, die Einrichtung zur Datenprüfung bei der Durchführung des Verfahrens gemäß einem der Ansprüche 1 bis 5 zu unterstützen.

10. Computerlesbares Speichermedium, wobei das computerlesbare Speichermedium ein Computerprogramm speichert, das Computerprogramm wenigstens einen Teil Code umfasst und der wenigstens eine Teil Code, wenn er von einem Computer ausgeführt wird, den Computer veranlasst, das Verfahren gemäß einem der Ansprüche 1 bis 5 auszuführen.

## Revendications

1. Procédé de vérification de données, le procédé étant **caractérisé par** les étapes consistant à :
obtenir une première valeur de compteur et une seconde valeur de compteur, la première valeur de compteur étant une valeur obtenue en réalisant un comptage par un équipement d'utilisateur (UE) pendant une transmission de données entre l'UE et une entité de fonction de plan d'utilisateur (UPF), et la seconde valeur de compteur étant une valeur obtenue en réalisant un comptage par l'entité UPF pendant la transmission de données entre l'UE et l'entité UPF ;
déterminer si la première valeur de compteur correspond à la seconde valeur de compteur ; et
si la première valeur de compteur ne correspond pas à la seconde valeur de compteur, envoyer un message de réponse à un élément de réseau de gestion de session.

2. Procédé selon la revendication 1, dans lequel le message de réponse est utilisé pour indiquer que la première valeur de compteur ne correspond pas à la seconde valeur de compteur.

3. Procédé selon la revendication 1 ou 2, dans lequel, si la première valeur de compteur ne correspond pas à la seconde valeur de compteur, le message de réponse comprend des informations de granularité de données et/ou la première valeur de compteur et/ou la seconde valeur de compteur.

4. Procédé selon l'une quelconque des revendications 1 à 3, dans lequel le fait de déterminer si la première valeur de compteur correspond à la seconde valeur de compteur comprend l'étape consistant à :
lorsqu'une différence entre la première valeur de compteur et la seconde valeur de compteur est supérieure à une valeur prédéfinie, déterminer que la première valeur de compteur ne correspond pas à la seconde valeur de compteur.

5. Procédé selon l'une quelconque des revendications 1 à 3, dans lequel le fait de déterminer si la première valeur de compteur correspond à la seconde valeur de compteur comprend l'étape consistant à :
lorsqu'une partie d'ordre élevé de la première valeur de compteur est différente d'une partie d'ordre élevé de la seconde valeur de compteur, déterminer que la première valeur de compteur ne correspond pas à la seconde valeur de compteur.

6. Appareil de vérification de données, l'appareil étant **caractérisé en ce qu'**il comprend :
un module de traitement (1410), configuré pour : obtenir une première valeur de compteur et une seconde valeur de compteur, la première valeur de compteur étant une valeur obtenue en réalisant un comptage par un équipement d'utilisateur (UE) pendant une transmission de données entre l'UE et une entité de fonction de plan d'utilisateur (UPF), et la seconde valeur de compteur étant une valeur obtenue en réalisant un comptage par l'entité UPF pendant la transmission de données entre l'UE et l'entité UPF ; et déterminer si la première valeur de compteur correspond à la seconde valeur de compteur ; et
un module émetteur-récepteur (1420), configuré pour : si la première valeur de compteur ne correspond pas à la seconde valeur de compteur, envoyer un message de réponse à un élément de réseau de gestion de session.

7. Appareil selon la revendication 6, dans lequel le message de réponse est utilisé pour indiquer que la première valeur de compteur ne correspond pas à la seconde valeur de compteur.

8. Appareil selon la revendication 6 ou 7, dans lequel, si la première valeur de compteur ne correspond pas à la seconde valeur de compteur, le message de réponse comprend des informations de granularité de données et/ou la première valeur de compteur et/ou la seconde valeur de compteur.

9. Appareil de vérification de données, comprenant un émetteur-récepteur et un processeur, l'émetteur-récepteur étant configuré pour prendre en charge une communication entre l'appareil de vérification de données et un élément de réseau de gestion de session, et recevoir et envoyer des informations ou une instruction selon l'une quelconque des revendications 1 à 5 ; et
le processeur étant configuré pour prendre en charge l'appareil de vérification de données lors de la réalisation du procédé selon l'une quelconque des revendications 1 à 5.

10. Support de stockage lisible par ordinateur, le support de stockage lisible par ordinateur stockant un programme informatique, le programme informatique comprenant au moins un élément de code, et l'au moins un élément de code, lorsqu'il est exécuté par un ordinateur, amenant l'ordinateur à réaliser le procédé selon l'une quelconque des revendications 1 à 5.
